Europäisches Patentamt

European Patent Office

Office européen des brevets

(11) Veröffentlichungsnummer: **0 039 424**
**B1**

(12) **EUROPÄISCHE PATENTSCHRIFT**

(45) Veröffentlichungstag der Patentschrift: **05.03.86**

(21) Anmeldenummer: **81102732.5**

(22) Anmeldetag: **10.04.81**

(51) Int. Cl.⁴: **G 01 V 9/04,** G 08 B 13/18,
G 01 B 11/00

(54) **Justieranordnung für Lichtgitter.**

(30) Priorität: **11.04.80 DE 3013967**

(43) Veröffentlichungstag der Anmeldung:
**11.11.81 Patentblatt 81/45**

(45) Bekanntmachung des Hinweises auf die
Patenterteilung:
**05.03.86 Patentblatt 86/10**

(84) Benannte Vertragsstaaten:
**FR GB IT SE**

(56) Entgegenhaltungen:
**EP-A-0 005 854**
**EP-A-0 011 744**
**FR-A-2 178 685**
**US-A-3 970 846**

(73) Patentinhaber: **Erwin Sick GmbH Optik-
Elektronik
Sebastian-Kneipp-Strasse 1
D-7808 Waldkirch (DE)**

(72) Erfinder: **VON Stein, Walter
Allmendweg 8
D-7808 Waldkirch (DE)**

(74) Vertreter: **Dipl.-Phys.Dr. Manitz Dipl.-Ing.
Finsterwald Dipl.-Ing. Grämkow Dipl.-Chem.Dr.
Heyn Dipl.-Phys.Rotermund
B.Sc. Morgan Robert-Koch-Strasse 1
D-8000 München 22 (DE)**

Courier Press, Leamington Spa, England.

## Beschreibung

Die Erfindung betrifft ein Lichtgitter gemäß dem Oberbegriff des Anspruches 1. Ein derartiges Lichtgitter ist aus der EP—A—00 05 854 bekannt.

Problematisch bei Lichtgittern, bei denen mehrere Lichtsenderelemente in Form von einzelnen, übereinander angeordneten Gallium-Arsenid-Dioden verwendet werden, ist, daß die Lichtgitterstrahlung häufig im Infraroten liegt und somit nicht mit bloßem Auge auf eine Lichtemfängeranordnung justiert werden kann. Die Lichtemfängeranordnung kann z.B. wie bei dem Gitter nach der DE—B 19 41 905 aus einem Lichtleitstab oder, wie bei der Anordnung gemäß der EP—A—0 005 854, aus einem Hohlspiegel und einem in seinem Brennpunkt angeordneten photoelektrischen Wandler bestehen. Wichtig ist bei derartigen Lichtgittern, daß die beispielsweise 10 GaAs-Dioden einwandfrei über den Hohlspiegel auf den photoelektrischen Wandler mit einer relativ kleinen Toleranz ausgerichtet werden, damit alle Strahlen genau an der Stelle des photoelektrischen Wandlers vereinigt werden.

Durch zyklische Schaltung der GaAs-Dioden entsteht dann am Ausgang des einzigen photoelektrischen Wandlers ein Impulszug konstanter Frequenz.

Die Optik von Sender und Empfänger läßt sich auch vertauschen. Licht kann z.B. von einer im Brennpunkt des Hohlspiegels angeordneten Lichtquelle ausgesandt werden, während die einzelnen in einer Linie angeordneten Empfangskollimatoren Licht im gebündelten Strahlengang aus dem vom Hohlspiegel abgegebenen Bündel empfangen und auf jeweils einen photoelektrischen Wandler konzentrieren. Indem die photoelektrischen Wandler nacheinander eingeschaltet werden, kann ebenfalls ein kontinuierlicher Impulszug konstanter Frequenz erzielt werden.

Es ist bereits eine Zeilvorrichtung für Reflexionslichtschranken mit einer Lumineszenzdiode als Lichtsender und einem photoelektrischen Wandler als Lichttempfänger (DE—A—25 16 875) bekannt, bei der am Lichtschrankengehäuse etwa parallel zur optischen Achse eine Visiereinrichtung vorliegt und eine beim Auftreffen des Lichtstrahls auf den Reflektor aufleuchtende Kontrollampe vorgesehen ist. Die Kontrollampe wird dabei von dem elektrischen Signal ausgelöst, das am Lichtempfänger entsteht, wenn der Lichtsender richtig zum Reflektor ausgerichtet ist.

Bei einem Lichtgitter mit zyklisch geschalteten Lichtsendern oder Lichtempfängern ist eine derartige Zielvorrichtung jedoch nicht anwendbar, weil sie auch dann ansprchen würde, wenn nur ein einziger Lichtsender bzw. Lichtempfänger der Gruppe mit dem einzigen Lichtempfänger bzw. Lichtsender ausgerichtet wäre. Um diese Schwierigkeit zu vermeiden und eine einwandfreie Ausrichtung aller Sender bzw. Empfänger der Gruppe mit dem einzigen Lichtempfänger- bzw. -sender zu ermöglichen, wurde das eingangs genannte Lichtgitter gemäß der EP—A—0 005 854 geschaffen, das von einer Koinzidenzschaltung und Justierlampen Gebrauch macht.

Aufgrund dieser Anordnung kann die Bedienungsperson den einzigen Lichttempfänger bzw. Lichtsender relativ zu der im Abstand davon angeordneten Gruppe zunächst in einer Richtung solange verschieben, bis eine der Justierlampen anspricht. Alsdann kann durch Verschiebung in einer senkrecht dazu liegenden Richtung bzw. Kippung der Gruppe relativ zum Lichtempfänger bzw. -sender das Ansprechen der zweiten Justierlampe herbeigeführt werden. Sobald beide Justierlampen angesprochen haben, ist die exakte Ausrichtung erfolgt. Trotz einer Vielzahl von Lichtsendern bzw. -empfängern in der Gruppe genügen also zwei Elemente und Koinzidenzschaltungen, um eine optimale Justierung herbeizuführen.

Die Arbeit der Bedienungsperson wird bei der bekannten Anordnung auf verschieden Weise erleichtert. Es ist z.B dort vorgesehen, daß die Justierlampen neben den tatsächlich zugeordneten Elementen der Gruppe liegen. Auf diese Weise hat die Bedienungsperson das Gefühl, daß sie doch mit sichtbarem Licht arbeitet, denn das Aufleuchten der neben den zugeordneten Elementen angeordneten Justierlampen kann sie mit auf den Justierlampen einfallenden Lichtstrahlen gleichsetzen.

Die Koinzidenzschaltung wird außerdem mittels der schwellenbildenden Verstärkern so ausgelegt, daß der Leuchtzustand der Justierlampen in den teilweise und vollends ausgerichteten Zuständen des Lichtgitters verschieden ist.

Die vorliegende Erfindung betrifft eine Weiterbildung der Erfindung nach der EP—A—0 005 854, welche die Ausrichtarbeit weiter erleichtert und außerdem eine Vergrößerung des Überwachungsbereiches bezweckt, ohne aufgrund ihrer großen Länge sehr teure und aufwendige optische Mittel anwenden zu müssen.

Es läßt sich verstehen, daß eine Vergrößerung des Überwachungsbereiches durch die Anordnung mehrerer Gruppen von Lichtsenderoder Lichtempfängerelementen und zugeordneten Einzellichtempfängern bzw. Einzellichtsendern in einer Reihe hintereinander realisiert werden kann, eine derartige Anordnung ist. z.B. der EP—A—0 011 744 zu entnehmen bei deres sich um Stand der Technik im Sin envon Art 54 (3) EPU handelt. So kann man z.B. innerhalb jeder Gruppe mit einem relativ kleinen streifenförmigen Hohlspiegel als Mittel zur Konzentration des Lichtes der einzelnen Lichtsenderelemente auf dem Einzellichtempfänger auskommen. Die mehreren kleinen Hohlspiegel werden dann einfach aneinandergereiht, um einen großen Überwachungsbereich zu ergeben. Die Ausrichtung einer derartigen Ansordnung ist jedoch nicht ohne weiteres mit den bekannten Mitteln zu erreichen, da man für die richtige Zuordnung der ausgewählten Elemente der Gruppe mit dem entsprechenden Einzellichtsender bzw. Einzellichtempfänger sorgen muß.

Um die oben gestellte Aufgabe zu lösen, wird erfindungsgemäß das eingangs genannte Lichtgitter gemäß den Merkmalen des kennzeichnenden Teils von Anspruch 1 weitergebildet.

Durch diese Weiterbildung kann die Bedienungsperson zusätzlich leicht erkennen, ob die Gruppe bzw. die Gruppen oder die Lichtempfänger- bzw. Lichtsenderanordnung zu der beabsichtigten Überwachungsebene schräg liegt, und erhält einen wichtigen Anhaltspunkt für die weitere Justierung. Liegt z.B. die Gruppe schräg, so leuchten dann die nahe der Mitte angeordneten Justierlampen, jedoch nicht die den außenliegenden Lichtsender- bzw. Lichtempfängerelementen zugeordneten Justierlampen.

Die vorgeschlagene Anordnung macht es wesentlich unwahrscheinlicher, daß ein ungefähr mittig angeordnetes Element mit einem falschen, einer anderen Gruppe zugeordneten Lichtempfänger bzw. Lichtsender ausgerichtet wird. Die Fehlausrichtung wird auch in diesem Fall leichter erkennbar.

Bevorzugt werden die beiden mittig angeordneten Senderelemente benutzt, weil dadurch nicht nur die Schräglage, sondern auch eine Fehlausrichtung mit der Kante zwischen zwei Hohlspiegeln erkannt werden kann und diese störende Kante kann dann entsprechend ausjustiert werden. Trifft einer der in der Mitte angeordneten Senderelemente die Kante, dann wird · das volle Licht nicht die Empfänger erreichen, so daß die zugeordneten Justierlampen blinken.

Die einzelnen Hohlspiegel mit den zugeordneten Lichtempfängern bzw Lichtsendern können in einer Reihe in einer Montageschiene angeordnet sein. Eine feste Zuordnung der einzelnen Hohlspiegel und zugeordneten Lichtempfänger bzw. Lichtsender ist jedoch nicht absolut notwendig, da auch hier die vorgeschlagene Anordnung Hilfe leisten kann.

Hier kann man normalerweise davon ausgehen, daß die einzelnen Lichtempfänger bzw. Lichtsender jeder Gruppe mit den dazugehörigen optische Mitteln (z.B. Hohlspiegeln) und ebenso die einzelnen Elemente jeder Gruppe untereinander bereits vom Werk aus justiert sind.

Besonders vorteilhafte Weiterbildungen der Erfindung sind durch die abhangige Ansprüche gekennzeichnet.

Die Erfindung wird im folgenden beispielsweise anhand der Zeichnung beschrieben; in dieser zeigt:

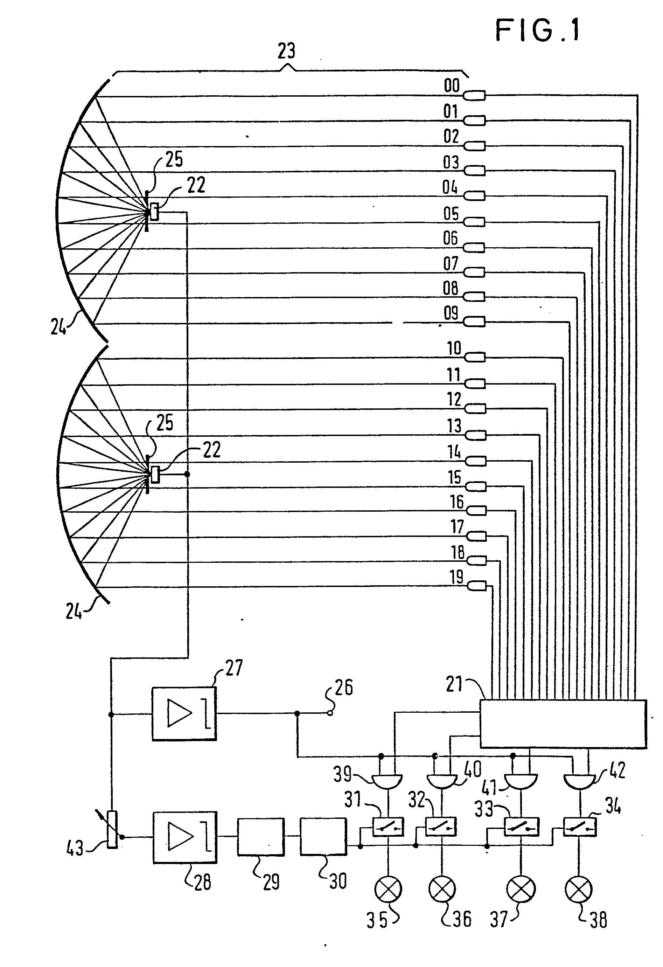

Fig. 1 eine schematische Darstellung eines aus 20 Elementen bestehenden Lichtsenders und zweier aus jeweils einem Hohlspiegel und einem photoelektrischen Wandler bestehenden Einzelempfänger, wobei die elektronische Auswerteschaltung als Blockschaltbild schematisch wiedergegeben ist, und

Fig. 2 eine schematische Vorderansicht des Lichtsenders, wobei der Querschnitt des Empfangsstrahls (gestrichelte Darstellung) schräg zu der Überwachungsebene unter einem Dejustierungswinkel δ zum Lichtsender angenommen ist.

Nach der Zeichnung sind auf einer Linie nebeneinander 20 Lichtsenderelemente oder Strahlungsquellen in Form von GaAs-Dioden 00 bis 19 angeordnet, welche ihr Licht durch den zu überwkchenden Raum 23 hindurch zu zwei die Lichtempfängeranordnung bildenden, unmittelbar hintereinander angeordneten streifenförmigen Hohlspiegeln 24 richten, in deren Brennpunkt jeweils hinter einer Spaltblende 25 ein einziger Lichtempfänger bzw. photoelektrischer Wandler 22 angeordnet ist.

Durch einen Ringzähler mit Taktgenerator 21 werden die GaAs-Dioden 00 bis 19 zyklisch zur Abgabe von Lichtblitzen erregt. Am Ausgang der photoelektrischen Wandler 22 entstehen somit elektrische Impuls-Rechtecksignale vorbestimmter Frequenz.

Beim Eingriff in den Überwchungsraum 23 fallen ein oder mehrere Impulse am Ausgang der photoelektrischen Wandler 22 aus. Die beiden photoelektrischen Wandler 22 sind parallel an den Eingang eines Schwellwertverstärkers 27 angelegt. Der Impulszug wird so über den Verstärker 27 mit einer ersten niedrigen Schaltswelle en einen Ausgang 26 gegeben, an dem eine bekannte Überwachungselektronik angeschlossen werden kann, die beim Ausfall eines oder mehrerer Impulse ein Warnsignal abgibt.

Zum Zwecke der Justierung ist das Ausgangssignal des Verstärkers 27 außerdem an die einen Eingänge von vier UND-Gattern 39, 40, 41, 42 angelegt, deren anderen Eingängen vom Ringzähler 21 her von den Lichtsenderelementen 00 und 19, 09 und 10 abgeleitete Eingangssignale zugeführt werden.

Generell werden die Signale von zwei jeweils an den entgegen gesetzten Enden der Gesamtreihe und insbesondere die Signale der beiden äußersten Lichtsenderelemente 00 und 19 und außerdem die Signale zweier nahe der Mitte liegender Lichtsenderelemente 09 und 10 angelegt, um auch noch die Kanten der Hohlspiegel optimal ausrichten zu können. Die ausgänge der UND-Gatter 39 bis 42 sind über normalerweise geschlossene, gesteuerte Schalter 31 bis 34 an Justierlampen 35 bis 38 angelegt.

Zusammen mit dem Aufleuchten der Lichtsenderelemente 00, 09, 10 und 19 werden an den jeweiligen Eingängen der UND-Gatter 39 bzw. 40, 42, 42 Eingangssignale vorliegen. Sind die Lichtsenderelemente 00, 09, 10 und 19 nicht richtig zum Fotowandler 22 ausgerichtet, so erhalten die vier anderen Eingänge der Gatter 39 bis 42 kein Signal und die Justierlampen 35 bis 38 leuchten nicht auf. Entsteht jedoch an den Fotowandlern 22 beim Aufleuchten eines oder aller vier Sender 00, 09, 10 oder 19 ein Signal, so erscheinen am entsprechenden Eingang der Gatter 39 bis 42 ein Eingangssignal, und das dadurch gebildete Ausgangssignal der Gatter bringt die betreffende· Justierlampe zum Aufleuchten.

Schließlich ist in der Zeichnung noch ein zweiter Verstärker 28 mit einer durch ein Potentiometer 43 regelbaren Ansprechschwelle V2 gezeigt. Der Verstärker gibt ein Ausgangssignal erste bei einem viel stärkeren Empfangssignal an den Empfangswandlern 22 ab als der Verstärker 27, welcher eine niedrigere Ansprechschwelle V1 besitzt.

Der Verstärker 28 ist über eine Schaltstufe 29 und einen Oszillator 30 mit einer Frequenz von 3 bis 5 Hz an vier Blinkschalter 31 bis 34 angeschlossen, die in den Weg von den Gattern 39 bis 42 zu den Justierlampen 35 bis 38 eingeschaltet sind.

Die Schaltstufe 29 ist so eingerichtet daß, sofern aus dem durch die Lichtsenderelemente 00 bis 19 hervorgerufenen Impulszug ein einziger Impuls am Ausgang des Verstärkers 28 fehlt, der Oszillator 30 eingeschaltet wird und über die Schalter 31 bis 34 das Signal zu den Justierlampen 35 bis 38 periodisch unterbricht. Es entsteht also ein Blinksignal, sofern die Justierung der Lichtsenderelemente 00, 09, 10 oder 19 schon so weit fortgeschritten ist, daß die Lichtsenderelemente am Ausgang des Verstärkers 27 ein Signal hervorrufen.

Erst durch noch bessere Ausrichtung zwischen den Lichtsenderelementen und der Lichtempfängeranordnung wird das Signal an den Wandlern 22 so stark, daß sämtliche Impulse auch die Schaltschwelle V2 überschreiten, so daß das Blinken der Lampen 35 bis 38 aufhört und ihr stetiges Leuchten die optimale Justierung anzeigt. Die doppelstufige Justierung mit den Verstärken 27, 28 ist für ein sichereres Arbeiten des Gerätes von Nutzen, denn aufgrund der besseren Justierung kann ein höherer Verschmutzungsgrad der Optik hingenommen werden.

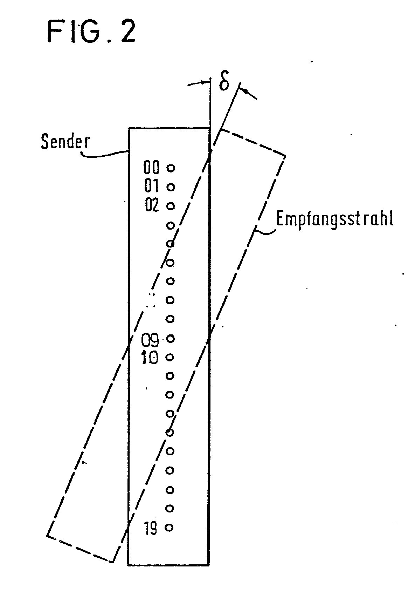

Mit den vier Anzeigelampen soll neben der Höhenlage- siehe EP—A—00 05 854 auch noch die Schräglage um den Winkel δ (Fig. 2) erkannt werden.

In der Fig. 2 ist die Neigung zwischen der Reihe von Lichtsenderelementen und der länglichen Lichtempfängeranordnung so stark angenommen, daß Licht von den Lichtsenderelementen 00 und 19 nicht empfangen wird, gagegen aber von der Lichtsenderelementen 09 und 10, so daß die Hauptrichtung des Empfangsbereichs gemeldet wird. Weiter kann aus der momentanen Anzeige entnommen werden, daß es sich um eine Neigung handelt. Je nach Neigungsrichtung wird sich dann das obere Lichtsenderelement 00 oder das untere 19 melden, wenn die Neigung zurückgenommen wird, so daß δ kleiner wird. Wird aber δ vergrößert, dann werden noch die Justierlampen 09 oder 10 verlöschen. Damit kann eine einfache Aussage gefunden werden, in welcher Richtung die korrekte Justage zu finden sein wird.

Bei mehreren Hohlspiegeln kann die Strecke zwischen den untersten und obersten Strahlungsquellen so groß werden, daß man die Neigungsrichtung nur mit mehr als vier Justieranzeigen finden wird.

**Patentansprüche**

1. Lichtgitter mit

— einer ersten Anordnung von parallelen Einzellichtschranken, welche zwischen einer Gruppe von in einer Reihe angeordneten und zyklisch eingeschalteten Lichtsenderelementen (00—09) oder Lichtempfängerelementen einerseits und einem einzigen Lichtempfänger (22) bzw. einem einzigen Lichtsender andererseits gebildet sind,

— einer Koinzidenzschaltung (39—42), der einerseits die elektrischen Sende- bzw. Empfangssignale ausgewählter Elemente der Gruppe und andererseits über einen ersten Verstärker (27) mit einer ersten Schaltschwelle das am einzige Lichtempfänger (22) bzw. am einzigen Lichtsender liegende Signal zugeführt sind,

— jeweils einer Justierlampe (35—38) für jedes ausgewählte Element der Gruppe, welche von dem bei Koinzidenz des elektrischen Sende- bzw. Empfangssignals des zugeordneten Elements mit dem am einzigen Lichtempfänger bzw. Lichtsender anliegenden Signal entstehenden Ausgangssignal der Koinzidenzschaltung über jeweils einen steuerbaren Schalter (31—34) gespeist wird,

— einem zweiten Verstärker (28) mit einer zweiten, im Vergleich zur ersten Schaltschwelle höheren Schaltschwelle, dem ebenfalls die am einzigen Lichtempfänger bzw. Lichtsender liegenden Signale zugeführt sind,

— einer dem zweiten Verstärker (28) nachgeordneten, eine Schaltstufe (29) und einen Oszillator (30) enthaltenden Steuerschaltung, welche die den Justierlampen (35—38) zugeordneten Schalter (31—34) bei Über- bzw. Unterschreitung der zweiten Schaltschwelle durch das dem zweiten Verstärker zugeführte Signal geschlossen hält bzw. periodische öffnet und schließt,

dadurch gekennzeichnet, daß

— weitere, mit der ersten Anordnung baugleiche Anordnungen von Einzellichtschranken vorgesehen sind, die im Anschluß aneinander und an die erste Anordnung unter Bildung einer Gesamtreihe von jeweils parallel ausgerichteten und zyklisch nacheinander eingeschalteten Einzellichtschranken angeordnet sind,

— die an den einzigen Lichtempfängern bzw. Lichtsendern (22) der einzelnen Gruppen der Anordnungen anliegenden Signale parallel an die Koinzidenzschaltung (39—42) gelegt sind und dieser außerdem neben den elektrischen Sende bzw. Empfangssignalen von zwei jeweils an den entgegengesetzten Enden der Gesamtreihe liegenden Lichtsender- bzw. Lichtempfängerelementen (00, 19) auch die elektrischen Sende- bzw. Empfangssignale von zwei weiteren, nahe der Mitte der Gesamtreihe und jeweils zu beiden Seiten davon leigenden Elementen (09, 10) zugeführt sind,
— für jedes der Elemente der Gesamtreihe, dessen elektrisches Sende- bzw. Empfangssignal der Koinzidenzschaltung (39—42) zugeführt ist, jeweils eine Justierlampe (35—38) vorgesehen ist, die mit der Koinzidenzschaltung jeweils über einen von der Steuerschaltung (29, 30) gesteuerten Schalter (31—34) verbunden ist.

2. Lichtgitter nach Anspruch 1, dadurch gekennzeichnet, daß die elektrischen Sende- bzw. Empfangssignale der vier ausgewählten Elemente (00, 09, 10, 19) der Gruppen je einem zusammen die Koinzidenzschaltung bildenden UND-Gatter (39, 40, 41, 42) zugeführt sind, an dessen anderem Eingang die Signale des ersten Verstärkers anstehen, und daß die Ausgänge der Und-Gatter je eine der Justierlampen (35, 36, 37, 38) ansteuern.

3. Lichtgitter nach einem der vorhergehenden Ansprüche dadurch gekennzeichnet, daß die vier Justierlampen (35, 36, 36, 38) unmittelbar neben dem zugeordneten Lichtempfänger bzw. -senderelement (00, 09, 10, 19) angeordnet sind.

**Revendications**

1. Rideau de lumière comprenant:

— un premier dispositif de barrières lumineuses parallèles individuelles qui sont formées, d'une part, entre un groupe d'éléments émetteurs de lumière (00—09) ou d'éléments récepteurs de lumière disposés en série et commutés cycliquement, et d'autre part, un récepteur de lumière unique (22) ou un émetteur de lumière unique,
— un circuit de coïncidence (39—42) auquel sont amenés d'une part, les signaux électriques d'émission ou de réception d'éléments choisis du groupe et, d'autre part, par l'intermédiaire d'un premier amplificateur (27) ayant un premier seuil de commutation, le signal se trouvant sur le récepteur de lumière unique (22) ou l'émetteur de lumière unique,
— une lampe de mise au point respective (35—38) destinée à chaque élément choisi du groupe, qui est alimentée par le signal de sortie du circuit de coïncidence par l'intermédiaire d'un commutateur commandable respectif (31—34), ce signal ayant lieu lors d'un coïncidence du signal électrique d'émission ou de réception de l'élément associé avec le signal se trouvant sur le récepteur de lumière unique ou l'émetteur de lumière,
— un deuxième amplificateur (28), ayant un deuxième seuil de commutation plus élevé par comparaison avec le premier seuil de commutation et auquel sont amenés également les signaux se trouvant sur le récepteur de lumière unique ou l'émetteur de lumière,
— un dispositif de commande en aval du second amplificateur (28) et contenant un étage de commutation (29) et un oscillateur (30) et qui maintient fermé ou ouvre périodiquement et ferme le commutateur (31—34) associé aux lampes de mise au point (35—38) lorsque le deuxième seuil de commutation se trouve au-dessus ou en dessous, au moyen du signal amené au deuxième amplificateur,

rideau de lumière caractérisé en ce que

— sont prévus d'autres dispositifs de barrières lumineuses individuelles ayant la même structure que le premier dispositif et qui sont disposés en raccordement l'un avec l'autre et avec le premier dispositif en formant une série complète de barrières lumineuses individuelles orientées, respectivement, en parallèle et commutées cycliquement l'une après l'autre,
— les signaux se trouvant sur les récepteurs de lumière uniques ou les émetteurs de lumière (22) des groupes individuels des dispositifs sont appliqués en parallèle sur le circuit de coïncidence (39—42) et à celui-ci sont amenés en outre, en plus des signaux électriques d'émission ou de réception de deux éléments respectifs d'émission de lumière ou de réception de lumière (00, 19) se trouvant sur les extrémités opposées de la série complète, également les signaux électriques d'émission ou de réception de deux autres éléments (09, 10) se trouvant près du milieu de la série complète et, respectivement, sur ses deux côtés,
— et on prévoit, pour chacun des éléments de la série complète dont le signal électrique d'émission ou de réception est amené au circuit de coïncidence (39—42), respectivement, une lampe de mise au point (35—38) qui est reliée au circuit de coïncidence par un commutateur respectif (31—34) commandé par le circuit de commande (29—30).

2. Rideau de lumière selon la revendication 1, caractérisé en ce que les signaux électriques d'émission ou de réception des quatre éléments choisis (00, 09, 10, 19) des groupes sont appliquées, respectivement, à une porte ET (39, 40, 41, 42) formant le circuit de coïncidence, et à l'autre entrée de laquelle se trouvent les signaux du premier amplificateur, et en ce que les sorties de la porte ET commandent, respectivement, une des lampes de mise au point (35, 36, 37, 38).

3. Rideau lumineux selon l'une des revendications précédentes, caractérisé en ce que les quatre lampes de mise au point (35, 36, 37, 38) sont disposées directement à côté de l'élément de réception de lumière ou d'émission de lumière associé (00, 09, 10, 19).

**Claims**

1. A light grid comprising

— a first arrangement of parallel individual light barriers which are formed between, on the one side, a group of cyclically switched on light transmitting elements (00—09) or light receiving elements which are arranged in a row and, on the other side, a single light receiver (22) or a single light transmitter respectively,

— a coincidence circuit (39—42) to which are fed, on the one hand, the electrical transmitted or received signals of selected elements of the group and on the other hand, via a first amplifier (27) with a first switching threshold, the signal which is present at the single light receiver (22) or single light transmitter,

— in each case an adjustment lamp (35—38) for each selected element of the group which is fed, on coincidence of the electrical transmitted or received signal of the associated element with the signal present at the single light receiver or light sender, with the output signal of the coincidence circuit via, in each case, a controllable switch (31—34),

— a second amplifier (28) with a second switching threshold which is higher than the first switching threshold and to which the signals present at the single light receiver or light transmitter are likewise passed,

— a control circuit arranged after the second amplifier (28) and containing a switching stage (29) and an oscillator (30) which, either holds closed switches (31—34) associated with the adjustment lamps (35—38) or periodically opens and closes them, depending on whether the signal supplied via the second amplifier exceeds or falls short of the second switching threshold respectively,

characterised in that

— further arrangements of individual light barriers are provided which are of the same construction as the first arrangement and are arranged joined together and onto the first arrangement while forming a complete row of respective individual light barriers which are aligned in parallel and switched on cyclically one after the other,

— the signals present at the single light receivers or light transmitters (22) of the individual groups of the arrangements are applied in parallel to the coincidence circuit (39—42), and, in addition to the electrical transmitted or received signals from two light transmitter elements or light receiving elements (00, 19) respectively lying at the opposite ends of the complete row, the electrical transmitted or received signals of two further elements (09, 10) lying near to the center of the complete row and respectively on both sides thereof are also passed to the coincidence circuit,

— a respective adjustment lamp (35—38) is provided for each element of the complete row of which the electrical transmitted or received signal is passed to the coincidence circuit (39—42), with the adjustment lamp being in each case connected with the coincidence circuit via a switch (31—34) controlled by the control circuit (29, 30).

2. Light grid in accordance with claim 1, characterised in that the electrical transmitted or received signals of the four selected elements (00, 09, 10, 19) of the groups are each passed to a respective AND gate (39, 40, 41, 42), to the other input of which the signals of the first amplifier are applied, with the AND gates together forming the coincidence circuit, and with the outputs of the AND gates each controlling one of the adjustment lamps (35, 36, 37, 38).

3. Light grid in accordance with one of the preceding claims, characterised in that the four adjustment lamps (35, 36, 37, 38) are arranged directly alongside the associated light receiver or transmitter element (00, 09, 10, 19).

FIG.1

## FIG. 2